# DEMANDE DE BREVET EUROPEEN

(11) **EP 0 865 979 A1**
(43) Date de publication de la demande: **23.09.1998**
(21) Numéro de dépôt: 98400613.0
(22) Date de dépôt: 16.03.1998
(51) Int. Cl.: B62D 1/18

(54) **Ensemble de colonne de direction réglable en position, par exemple pour véhicule automobile**

(30) Priorité: 19.03.1997 FR 9703355
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR); Mouhot, Frédéric, 25420 Voujeaucourt (FR); Duchene, Jean-Marc, 25200 Grand-Charmont (FR)
(74) Mandataire: Habasque, Etienne Joel Jean-François

(57) **Abrégé**

Cet ensemble muni d'un corps (1) relié à une structure de fixation (5) de celui-ci sur le reste de la structure du véhicule par des moyens de réglage (7) en position, munis de moyens de blocage (8), déplaçables entre des positions de verrouillage et de déverrouillage, est caractérisé en ce que les moyens de blocage sont solidaires de la structure de fixation (5), en ce que les moyens de réglage (7) comportent un mécanisme à deux biellettes (9,10) dont des premières extrémités sont articulées autour d'un organe des moyens de blocage et dont des secondes extrémités sont articulées par rapport au corps, en ce qu'au moins l'une des biellettes (9,10) comporte une lumière (9a,10a) pour le déplacement de l'organe lors du réglage, et en ce que les moyens de blocage (8) sont adaptés pour bloquer les biellettes (9,10) l'une par rapport à l'autre et par rapport à la structure de support pour bloquer le corps en position.

## Description

La présente invention concerne un ensemble de colonne de direction réglable en position par exemple pour véhicule automobile.

On connaît déjà dans l'état de la technique, un certain nombre d'ensembles de ce type, qui comportent un corps de colonne de direction, dans lequel est disposé un arbre de direction, dont une extrémité est adaptée pour recevoir un volant de direction et dont une autre extrémité est adaptée pour être reliée au reste du mécanisme de direction du véhicule, par l'intermédiaire par exemple d'une articulation à la cardan.

Le corps de colonne est relié à proximité de chacune de ses extrémités, à des moyens de fixation sur une structure de support associée au reste de la structure du véhicule et comportant les uns, des moyens d'accrochage sur cette structure, et les autres, des moyens de réglage en position du corps par rapport à cette structure, munis de moyens de blocage en position déplaçables entre des positions de verrouillage et de déverrouillage pour permettre un réglage en position du corps et donc de l'ensemble de colonne par rapport au reste de la structure du véhicule, afin d'adapter la position du volant à la morphologie du conducteur.

D'une façon générale, les moyens d'accrochage prévus à l'une des extrémités du corps se présentent sous la forme d'un palier de guidage de celui-ci, articulé par exemple entre des flasques de la structure de support.

Les moyens de réglage prévus à proximité de l'autre extrémité du corps comprennent quant à eux par exemple un organe de montage solidaire du corps et monté déplaçable en position entre des flasques de la structure de support, et des moyens de blocage en position déplaçables entre des positions de verrouillage et de déverrouillage pour permettre un blocage en position du corps entre les flasques.

Différents exemples de réalisation de tels moyens de réglage ont été décrits dans l'état de la technique.

Le mode de réalisation le plus répandu de ces moyens de réglage est celui dans lequel les flasques de la structure de support et l'organe de montage relié au corps comportent des lumières croisées s'étendant par exemple perpendiculairement l'une par rapport à l'autre, ces lumières étant adaptées pour recevoir un tirant des moyens de blocage.

Différents modes de réalisation de ces moyens de blocage ont également été décrits dans l'état de la technique.

D'une façon générale, ces moyens de blocage comportent des moyens de serrage des flasques de la structure de support contre l'organe de montage du corps pour assurer le blocage du corps en position entre ceux-ci.

Ces moyens de serrage peuvent également présenter différentes structures appropriées comme par exemple à came, à excentrique, à bille, à genouillère, etc...

Les flasques de la structure de support peuvent alors comporter des lumières s'étendant sensiblement perpendiculairement à l'axe du corps de colonne, tandis que l'organe de montage de ce corps peut quant à lui comporter au moins une lumière s'étendant sensiblement parallèlement à l'axe du corps de colonne, ce qui permet, lorsque les moyens de blocage sont en position de déverrouillage, de déplacer le corps par rapport aux flasques et donc à la structure de support pour le régler en position.

Lorsque la position de réglage souhaitée est atteinte, l'utilisateur peut alors déplacer les moyens de blocage vers leur position de verrouillage pour assurer le blocage du corps en position .

Des moyens d'équilibrage du corps en position, constitués par exemple par un organe élastique peuvent également être interposés entre la structure de support et le corps.

Des moyens d'absorption d'énergie de choc par contrôle des déplacements du corps par rapport à la structure peuvent également être intégrés dans de tels ensembles pour réduire les risques de blessures des conducteurs de véhicule en cas de choc.

Enfin, des moyens de rétraction par exemple pyrotechniques peuvent également être utilisés dans certains ensembles pour assurer une rétraction de l'ensemble de colonne en cas de choc.

On conçoit cependant à la lumière de la description qui précède des ensembles de l'état de la technique, que ceux-ci présentent un certain nombre d'inconvénients, notamment au niveau des déplacements relatifs des moyens de blocage par rapport à la structure de support et au corps de colonne sur lequel sont accrochés par exemple des moyens de garnissage de cet ensemble de colonne, en forme de gaine, s'étendant généralement entre la planche de bord du véhicule et le volant de direction.

En effet, si les moyens de réglage présentent la structure décrite précédemment, dans laquelle les flasques de la structure de support comportent des lumières s'étendant à peu près perpendiculairement à l'axe du corps de colonne, l'organe de montage de celui-ci comportant au moins une lumière s'étendant à peu prés parallèlement à cet axe, lors des réglages en position de ce corps, les moyens de blocage suivent les déplacements du corps lors d'un réglage en altitude mais restent fixes en position lors d'un réglage axial de celui-ci, dans la mesure où c'est l'organe de montage du corps et donc ce corps qui se déplacent par rapport au tirant des moyens de blocage pour permettre ce réglage.

On conçoit alors que si les moyens de garnissage de ce corps de colonne sont reliés à celui-ci, il est nécessaire de prévoir dans ces moyens de garnissage, une lumière de déplacement par exemple de la poignée de manoeuvre de ces moyens de blocage, si ceux-ci sont à commande manuelle par un utilisateur, assez grande pour permettre un déplacement relatif de cette poignée et des moyens de garnissage.

Or, ceci complique la structure et dégrade l'esthétique de ces moyens de garnissage.

Des problèmes analogues se posent si l'on décide d'implanter la poignée de manoeuvre des moyens de blocage dans la planche de bord du véhicule, en inversant par exemple la disposition des moyens de réglage décrits précédemment.

Le but de l'invention est donc de résoudre ces problèmes.

A cet effet, l'invention a pour objet un ensemble de colonne de direction réglable en position par exemple pour véhicule automobile, du type comportant un corps de colonne de direction, dans lequel est disposé un arbre de direction, et relié à proximité de chacune de ses extrémités à des moyens de fixation sur une structure de support associée au reste de la structure du véhicule et comportant les uns, des moyens d'accrochage sur cette structure et les autres, des moyens de réglage de position du corps par rapport à cette structure, munis de moyens de blocage en position, déplaçables entre des positions de verrouillage et de déverrouillage pour permettre un réglage en position du corps et donc de l'ensemble de colonne, caractérisé en ce que :
- les moyens de blocage sont solidaires de la structure de support,
- les moyens de réglage comportent au moins un mécanisme à au moins deux biellettes, dont des premières extrémités sont articulées autour d'un axe commun sur un organe des moyens de blocage et dont des secondes extrémités sont articulées par rapport au corps autour d'axes décalés l'un par rapport à l'autre,
- au moins l'une des biellettes comporte une lumière pour le déplacement de l'organe des moyens de blocage lors du réglage en position du corps, et
- les moyens de blocage sont adaptés pour bloquer en position de verrouillage, les biellettes l'une par rapport à l'autre et par rapport à la structure de support pour bloquer le corps et donc l'ensemble de colonne en position.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant un exemple de réalisation d'un ensemble de colonne selon l'invention;
- la Fig.2 représente une vue en perspective de côté illustrant un mode de réalisation de moyens de réglage entrant dans la constitution d'un ensemble de colonne de direction selon l'invention;
- la Fig.3 représente un exemple de réalisation de moyens d'accrochage entrant dans la constitution d'un tel ensemble de colonne; et
- la Fig.4 représente une vue en coupe illustrant un mode de réalisation de moyens d'articulation entrant dans la constitution d'un tel ensemble.

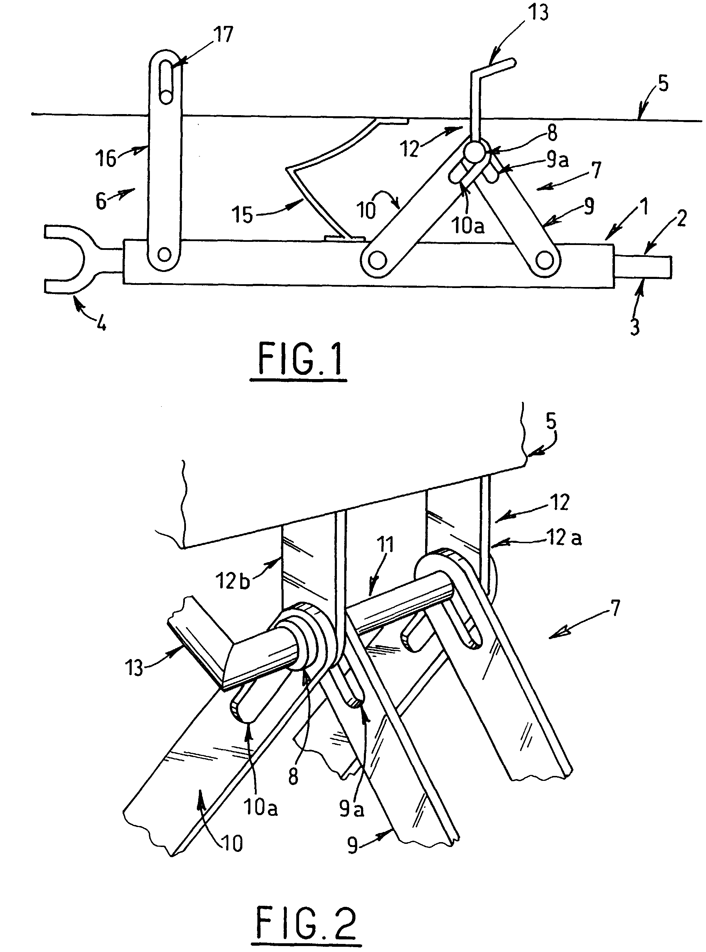

On a en effet représenté de façon schématique sur la figure 1, un exemple de réalisation d'un ensemble de colonne de direction réglable en position, notamment pour véhicule automobile.

Cet ensemble comporte de façon classique un corps de colonne de direction désigné par la référence générale 1, dans lequel est disposé un arbre de direction désigné par la référence générale 2.

Cet arbre de direction 2 est monté rotatif dans ce corps de colonne 1 de manière appropriée et présente une première extrémité désignée par la référence générale 3, adaptée pour recevoir un volant de direction du véhicule et une seconde extrémité désignée par la référence générale 4, se présentant par exemple sous la forme d'une fourche de cardan adaptée pour être reliée au reste du mécanisme de direction du véhicule, de façon classique.

Ce corps de colonne est relié à proximité de chacune de ses extrémités à des moyens de fixation sur une structure de support désignée par la référence générale 5 sur cette figure 1, associée au reste de la structure du véhicule et comportant les uns, des moyens d'accrochage 6 sur cette structure et les autres, des moyens de réglage 7 en position du corps par rapport à cette structure, ces moyens de réglage étant munis de moyens 8 de blocage en position, déplaçables entre des positions de verrouillage et de déverrouillage, pour permettre un réglage en position du corps et donc de l'ensemble de colonne, de façon classique.

Selon l'invention, les moyens de blocage 8 sont solidaires de la structure de support 5 et les moyens de réglage 7 comportent au moins un mécanisme à au moins deux biellettes croisées, désignées par les références générales 9 et 10 sur ces figures, interposé entre le reste de la structure de support 5 et le corps 1, dont des premières extrémités sont articulées autour d'un axe commun sur un organe des moyens de blocage 8 solidaires de la structure de support 5 et dont des secondes extrémités sont articulées par rapport au corps 1, autour d'axes décalés l'un par rapport à l'autre.

De plus, au moins l'une des biellettes 9 ou 10 du ou de chaque mécanisme à biellettes comporte une lumière 9a ou 10a pour le déplacement de l'organe des moyens de blocage 8 lors du réglage en position du corps 1 et les moyens de blocage 8 comportent des moyens de serrage, en position de verrouillage, des biellettes 9,10 l'une par rapport à l'autre et par rapport à la structure de support 5, pour bloquer le corps et donc l'ensemble de colonne en position.

Comme cela est visible plus clairement sur la figure 2, les moyens de blocage 8 peuvent en fait comporter au moins un tirant désigné par la référence générale 11, ce tirant 11 étant solidaire de la structure de support 5 et traversant par exemple un organe de montage relié à celle-ci, désigné par la référence générale 12 sur ces figures.

Cet organe de montage 12 de la structure de support peut présenter différentes structures appropriées et peut par exemple comporter des pattes 12a et 12b en saillie à partir de celle-ci, munies de trous de passage de ce tirant 11, les extrémités du tirant 11 faisant alors saillie au-delà de chacune de ces pattes 12a et 12b.

Chaque extrémité du tirant 11 solidaire de la structure de support peut alors être associée à un mécanisme à au moins deux biellettes des moyens de blocage 8 comme cela est illustré sur cette figure 2.

En effet, dans l'exemple de réalisation représenté sur cette figure, les moyens de réglage 7 comportent deux mécanismes à deux biellettes disposés symétriquement de part et d'autre de ce corps de colonne 1, entre celui-ci et le reste de la structure de support 5.

Ces biellettes s'étendent par exemple de façon générale perpendiculairement l'une à l'autre et chacune de ces biellettes comportent une lumière 9a,10a, les lumières de deux biellettes correspondantes s'étendant alors par exemple perpendiculairement l'une par rapport à l'autre.

Les extrémités correspondantes du tirant 11 traversent alors ces lumières 9a, 10a pour permettre une articulation des biellettes 9,10 autour de ce tirant 11.

Ces extrémités du tirant sont également associées à des moyens d'immobilisation par serrage, en position de verrouillage, des biellettes 9,10 l'une par rapport à l'autre et par rapport à la structure de support 5 pour assurer un blocage en position de ce corps.

Différents exemples de réalisation de ces moyens de blocage peuvent être envisagés et sont déjà connus dans l'état de la technique.

Dans celui illustré sur ces figures, l'une des extrémités du tirant comporte des moyens de butée, tandis que l'autre extrémité de celui-ci est associée à des moyens de rapprochement des biellettes 9,10 contre l'organe de montage 12 de la structure de support 5.

De tels moyens étant bien connus dans l'état de la technique, on ne les décrira pas plus en détail. On pourra par exemple se reporter au document EP-0 592 278 qui décrit différents exemples de tels moyens.

Ces moyens sont déplaçables par exemple par un utilisateur entre des positions de verrouillage et de déverrouillage, par exemple par l'intermédiaire d'un levier désigné par la référence générale 13 sur ces figures et muni d'une poignée de manoeuvre.

Ces moyens de rapprochement peuvent comporter comme cela a été indiqué précédemment, des moyens à excentrique, à came, à genouillère, à bille ou autres.

Pour des raisons de clarté de la description, on ne décrira par la suite que l'un des mécanismes à biellettes prévu sur l'un des côtés du corps de colonne 1.

Ces biellettes ont été désignées par les références générales 9 et 10 sur ces figures 1 et 2 et pour des raisons de compréhension, on reprendra ces mêmes numéros de référence par la suite, bien que les biellettes représentées sur la figure 2 présentent des formes différentes de celles illustrées schématiquement sur la figure 1.

Les premières extrémités de ces biellettes 9 et 10 sont articulées, comme cela a été indiqué précédemment, autour d'un axe commun sur un organe des moyens de blocage.

Cet organe des moyens de blocage est en fait constitué par le tirant 11, comme cela a été indiqué précédemment, l'axe commun d'articulation de ces extrémités de biellettes étant alors l'axe de ce tirant.

Les autres extrémités de ces biellettes 9,10 sont articulées par rapport au corps 1 autour d'axes décalés l'un par rapport à l'autre.

Des moyens d'équilibrage du corps en position peuvent également être envisagés.

Ces moyens sont désignés par la référence générale 15 sur la figure 1, dans laquelle on peut constater que ces moyens d'équilibrage sont interposés entre la structure de support 5 et le corps de colonne 1 et peuvent être formés par exemple par un organe élastique.

Les moyens d'accrochage 6 prévus à l'autre extrémité du corps 1 peuvent présenter par exemple une structure articulée de suspension de celle-ci, permettant de guider cette extrémité du corps 1 lors de ses réglages en position.

Différents modes de réalisation de ces moyens peuvent être envisagés et sont déjà connus dans l'état de la technique.

On conçoit alors que le fonctionnement d'un tel ensemble est le suivant.

Lorsque les moyens de blocage 8 sont en position de déverrouillage, l'utilisateur peut régler en position le corps de colonne 1 en saisissant le volant et en le déplaçant jusqu'à la position souhaitée.

Lors de ces réglages en position du corps de colonne 1, les moyens de blocage 8 restent stationnaires par rapport à la structure de support 5, car le tirant 11 de ceux-ci est solidaire de l'organe de montage 12 de celle-ci et les biellettes 9 et 10 se déplacent par rapport à ce tirant, les biellettes constituant en quelque sorte un triangle déformable de chaque côté du corps.

Ces biellettes se déplacent alors angulairement l'une par rapport à l'autre et par rapport à la structure de support dans la mesure où elles peuvent pivoter et se déplacer par rapport au tirant des moyens de blocage grâce à leurs lumières et pivoter autour de leurs axes d'articulation par rapport au corps.

Les moyens d'accrochage 6 prévus à l'autre extrémité du corps sont adaptés pour permettre les différents déplacements souhaités du corps en comprenant par exemple un palier de guidage axial du corps monté articulé entre des flasques du reste de la structure de support.

Bien entendu d'autres modes de réalisation peuvent être envisagés et le corps et l'arbre peuvent également comporter chacun deux portions télescopiques axialement l'une dans l'autre.

Comme cela sera décrit plus en détail par la suite, d'autres modes de réalisation de ces moyens d'accrochage peuvent être envisagés.

Lorsque le volant et donc l'ensemble de colonne sont en position de réglage, l'utilisateur peut déplacer les moyens de blocage 8 vers leur position de verrouillage, par exemple en manoeuvrant le levier 13. Dans ce cas, les moyens de blocage 8 assurent une immobilisation en position par serrage des biellettes de chaque mécanisme l'une par rapport à l'autre et par rapport à la structure de support 5 en serrant celles-ci contre l'organe de montage 12 de cette structure afin de bloquer en position le corps et donc l'ensemble de colonne.

On notera que du fait que le tirant 11 des moyens de blocage 8 est solidaire de la structure de support 5, les moyens de blocage 8 restent stationnaires en position par rapport à celle-ci.

On conçoit alors que ceci permet de simplifier l'intégration des moyens de manoeuvre de ces moyens de blocage par exemple dans la planche de bord du véhicule.

Dans le mode de réalisation représenté sur ces figures, les moyens d'accrochage 6 comportent au moins une patte de suspension articulée du corps 1 sur la structure de fixation 5, désignée par la référence générale 16 sur ces figures, cette patte de suspension 16 étant articulée à chacune de ses extrémités respectivement sur la structure de support 5 et le corps de colonne 1 par des moyens d'articulation qui seront décrits plus en détail par la suite.

Une patte de suspension 16 peut bien entendu être prévue de chaque côté du corps de colonne.

La ou chaque patte de suspension 16 correspondante peut comporter au niveau de son articulation sur le reste de la structure de support 5, une boutonnière désignée par la référence générale 17 permettant en cas de choc d'absorber une certaine énergie, par contrôle des déplacements du corps 1 par rapport à la structure de support 5, le corps 1 venant alors pousser sur la patte de suspension 16 pour amener les moyens d'articulation de cette patte sur le reste de la structure de support 5, à absorber une certaine énergie de choc en se déplaçant par rapport à la boutonnière de celle-ci.

Il va de soi bien entendu que d'autres modes de réalisation de ces moyens d'absorption d'énergie de choc peuvent être envisagés et que ceux-ci peuvent directement être intégrés dans les biellettes du ou de chaque mécanisme à biellettes, celles-ci comportant alors par exemple des zones déformables d'absorption d'énergie.

Tout autre moyen d'absorption d'énergie déjà connu dans l'état de la technique peut également être envisagé, que ce soit par réduction de côte du corps de colonne et de l'arbre ou par utilisation de moyens d'absorption d'énergie interposés entre le corps et le reste de la structure de support.

On a indiqué précédemment que les moyens d'accrochage 6 de l'extrémité correspondante du corps 1 sur le reste de la structure pouvaient en fait comporter des moyens de suspension de l'extrémité correspondante de ce corps de colonne 1 par rapport au reste de cette structure de support 5.

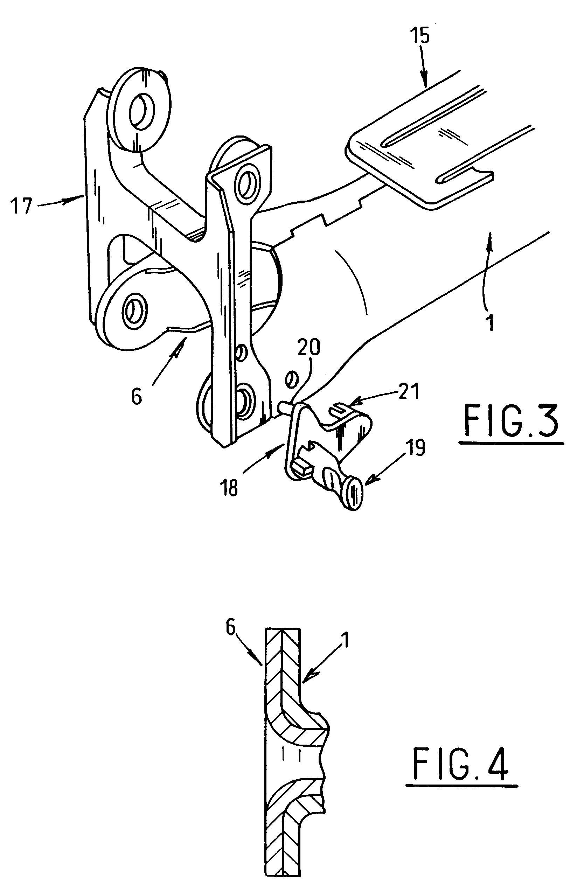

On a représenté sur la figure 3, un autre exemple de réalisation de tels moyens d'accrochage 6. En fait, ceux-ci peuvent par exemple présenter la forme générale d'un organe en H, 17, dont les extrémités des branches inférieures sont articulées sur le corps de colonne 1 et dont les extrémités des branches supérieures sont articulées sur le reste de la structure de support 5.

Dans ce cas, il peut être intéressant d'associer à ces moyens de suspension, des moyens d'immobilisation temporaire en position de ceux-ci par rapport au corps pour faciliter leur montage sur le véhicule. Ces moyens d'immobilisation temporaire sont désignés par la référence générale 18 sur cette figure 9 et comprennent par exemple un organe d'immobilisation comportant un doigt de préhension désigné par la référence générale 19, permettant à un opérateur de le retirer après le montage de l'ensemble sur le véhicule, et au moins deux doigts de maintien en position désignés par les références générales 20 et 21 sur cette figure, adaptés pour coopérer chacun avec un trou par exemple ménagé dans les moyens de suspension 6 et le corps de colonne 1, pour les maintenir en position relative lors du montage de cet ensemble sur le reste de la structure du véhicule.

En regard de cette figure, on pourra également noter le mode de réalisation particulier des moyens d'équilibrage 15 du corps en position qui peuvent présenter la forme générale d'un W, dont les branches latérales peuvent être associées par exemple au reste de la structure de support de l'ensemble sur le véhicule et dont la branche centrale peut être associée au corps 1 ou à l'une des biellettes d'un mécanisme entrant dans la constitution des moyens de réglage en position de l'ensemble selon l'invention.

D'une façon symétrique, la branche centrale de cet organe peut également être associée au reste de la structure de support, tandis que les branches latérales de celui-ci peuvent être associées aux biellettes correspondantes de chaque mécanisme à deux biellettes disposées de part et d'autre du corps de colonne.

Comme on l'a indiqué précédemment, plusieurs pièces de cet ensemble sont articulées les unes par rapport aux autres.

Cette articulation peut en fait être obtenue par des canons d'articulation venus de matière avec ces pièces comme cela est représenté sur la figure 4, ces canons de pivotement étant obtenus directement par tout outil approprié, ce qui permet d'éviter l'utilisation de pièces supplémentaires pour constituer les articulations des pièces l'une par rapport à l'autre.

Ceci est le cas par exemple des moyens d'accrochage 6 et du corps 1 représentés sur cette figure 4.

On conçoit alors que l'ensemble de colonne selon l'invention présente un certain nombre d'avantages, par rapport aux ensembles de l'état de la technique, notamment au niveau de la simplification de l'intégration du levier de manoeuvre des moyens de blocage, car les moyens de blocage associés à ce levier de manoeuvre sont solidaires de la structure de support et restent stationnaires en position lors des réglages en position du corps de colonne.

Il va de soi bien entendu que différents modes de réalisation de cet ensemble peuvent être envisagés.

## Revendications

1. Ensemble de colonne de direction réglable en position notamment pour véhicule automobile, du type comportant un corps de colonne de direction (1) dans lequel est disposé un arbre de direction (2) et relié à proximité de chacune de ses extrémités à des moyens de fixation sur une structure de support (5) associée au reste de la structure du véhicule et comportant les uns, des moyens d'accrochage (6) sur cette structure et les autres, des moyens de réglage (7) en position du corps par rapport à cette structure, munis de moyens de blocage (8) en position, déplaçables entre des positions de verrouillage et de déverrouillage, pour permettre un réglage en position du corps (1) et donc de l'ensemble de colonne, caractérisé en ce que les moyens de blocage (8) sont solidaires de la structure de support (5), en ce que les moyens de réglage (7) comportent au moins un mécanisme à au moins deux biellettes (9,10) dont des premières extrémités sont articulées autour d'un axe commun sur un organe (11) des moyens de blocage (8) et dont des secondes extrémités sont articulées par rapport au corps de colonne (1), autour d'axes décalés l'un par rapport à l'autre, en ce qu'au moins l'une des biellettes (9,10) comporte une lumière (9a,10a) pour le déplacement de l'organe (11) des moyens de blocage (8) lors du réglage en position du corps, et en ce que les moyens de blocage (8) sont adaptés pour bloquer, en position de verrouillage, les biellettes (9,10) l'une par rapport à l'autre et par rapport à la structure de support (5) pour bloquer le corps et donc l'ensemble de colonne en position.

2. Ensemble selon la revendication 1, caractérisé en ce que l'organe des moyens de blocage est un tirant (11) de ceux-ci.

3. Ensemble selon la revendication 1 ou 2, caractérisé en ce que les moyens de blocage (8) comprennent des moyens de manoeuvre (13) actionnables à un utilisateur.

4. Ensemble selon la revendication 3, caractérisé en ce que les moyens de manoeuvre comprennent un levier (13).

5. Ensemble selon l'une quelconque des revendications précédentes, caractérisé en ce que chaque biellette (9,10) du ou de chaque mécanisme comporte une lumière (9a,10a) pour le déplacement de l'organe (11), permettant des réglages en positions angulaire et axiale de l'ensemble de colonne par rapport au reste de la structure du véhicule.

6. Ensemble selon l'une quelconque des revendications précédentes, caractérisé en ce qu'il comporte un mécanisme à au moins deux biellettes (9,10) disposé de chaque côté du corps (1).

7. Ensemble selon l'une quelconque des revendications précédentes, caractérisé en ce qu'il comporte des moyens d'équilibrage (15) du corps (1) en position par rapport à la structure.

8. Ensemble selon la revendication 7, caractérisé en ce que les moyens d'équilibrage (15) comportent un organe élastique dont une portion est associée à la structure de support (5) et dont une autre portion est associée au corps (1).

9. Ensemble selon l'une quelconque des revendications précédentes, caractérisé en ce que les moyens d'accrochage (6) de l'extrémité correspondante du corps (1) sur la structure de support (5) comportent des moyens de suspension (16;17) de celui-ci, articulés à leurs extrémités, d'une part, sur cette structure et d'autre part, sur le corps.

10. Ensemble selon la revendication 9, caractérisé en ce que les moyens de suspension (17) présentent la forme générale d'un H, dont les extrémités des branches supérieures sont articulées sur le reste de la structure (5) et dont les extrémités des branches inférieures sont articulées sur le corps (1).

11. Ensemble selon la revendication 9 ou 10, caractérisé en ce que les moyens d'articulation de l'extrémité correspondante des moyens de suspension sur le reste de la structure (5) comportent au moins une boutonnière (17) d'absorption d'énergie de choc par contrôle des déplacements du corps (1) par rapport au reste de la structure.

12. Ensemble selon l'une quelconque des revendications précédentes, caractérisé en ce que des moyens d'absorption d'énergie de choc sont interposés entre le corps (1) et le reste de la structure de support de celui-ci.

13. Ensemble selon l'une quelconque des revendications précédentes, caractérisé en ce que des moyens d'absorption d'énergie de choc sont intégrés dans les biellettes (9,10) du ou de chaque mécanisme à biellettes des moyens de réglage (7).

14. Ensemble selon l'une quelconque des revendications précédentes, caractérisé en ce que les articulations des différentes pièces de celui-ci l'une sur l'autre sont réalisées par des canons de pivotement venus de matière avec celles-ci.
